# EUROPÄISCHE PATENTSCHRIFT

(11) **EP 3 135 424 B1**
(45) Veröffentlichungstag und Bekanntmachung des Hinweises auf die Patenterteilung: **27.06.2018**
(21) Anmeldenummer: 16172555.1
(22) Anmeldetag: 02.06.2016
(51) Int. Cl.: B23K 26/00, B29D 30/68, B29D 30/72, B60C 13/00, B60C 11/03

(54) **VERFAHREN ZUM EINBRINGEN VON STRUKTUREN IN DIE OBERFLÄCHE EINES FAHRZEUGLUFTREIFENS**
METHOD FOR INTRODUCING STRUCTURES INTO THE SURFACE OF A PNEUMATIC TYRE FOR A VEHICLE
PROCÉDÉ POUR L'INSERTION DE STRUCTURES DANS LA SURFACE D'UN PNEU DE VÉHICULE

(30) Priorität: 28.08.2015 DE 102015216524
(43) Veröffentlichungstag der Anmeldung: 01.03.2017
(73) Patentinhaber: Continental Reifen Deutschland GmbH, 30165 Hannover (DE)
(72) Erfinder: Jabri, Mohamed Aymen, 30167 Hannover (DE); Salem, Amine, 30419 Hannover (DE)
(74) Vertreter: Widjaja, Wira

(56) Entgegenhaltungen:
- EP-A1- 0 650 824
- EP-A1- 0 958 881
- EP-A1- 2 905 125
- EP-A2- 0 760 297
- CA-A1- 2 152 897
- DE-U1- 20 310 931
- US-A- 4 564 737
- US-A1- 2002 089 092

## Beschreibung

Die Erfindung betrifft ein Verfahren zum Einbringen von Strukturen in die Oberfläche eines Fahrzeugluftreifens nach dem Oberbegriff des Patentanspruches 1.

Es ist bekannt, Fahrzeugluftreifen mittels eines Lasers zu kennzeichnen, beispielsweise um eine Seriennummer, den Herstellernamen oder sonstige Zeichen auf den Fahrzeugluftreifen, insbesondere in die Seitenwand, einzugravieren. Weiterhin kann mittels eines Lasers auch ein Profil in den Laufstreifen des Fahrzeugluftreifens eingebracht oder modifiziert und verbessert werden, was bisher jedoch nur zu Versuchszwecken oder in Kleinstserien erfolgt.

Aus der US 5 668 731 sind eine Vorrichtung und ein Verfahren zum Einbringen eines Profils in den Laufstreifen eines Fahrzeugluftreifens bekannt, wobei ein kontinuierlich betriebener Laser verwendet wird und der Laserstrahl und der Fahrzeugluftreifen relativ zueinander rotiert und bewegt werden können.

Weiter ist aus der CA 1 146 635 allgemein ein Verfahren zum Einbringen eines Profils in den Laufstreifen eines Fahrzeugluftreifen mittels eines gepulst betriebenen CO₂-Lasers bekannt.

Die Verwendung eines gepulsten Lasers ist aus der CA 2 152 897 grundsätzlich auch zum Einbringen einer Kennzeichnung in die Seitenwände und die Innenschicht eines Fahrzeugluftreifens bekannt. In dieser Druckschrift wird die Verwendung eines CO₂-Lasers mit einer Pulsdauer von 100 ns und einer Pulsfrequenz im Bereich von 10 Hz beschrieben.

Um den Laserstrahl über die zu gravierende Oberfläche des Fahrzeugluftreifens zu bewegen, ist es bekannt, einen Galvanometer-Scanner zu verwenden. Dies geht beispielsweise aus der DE 203 10 931 U1 hervor, wobei hier ein kontinuierlich betriebener CO₂-Laser verwendet wird.

Die EP 2 905 125 A1, EP 0650 824 A1, US 4 564 737 A und die EP 0760 297 A2 offenbaren weitere bekannte Verfahren oder Vorrichtungen zum Bearbeiten von unterschiedlichen Materialien und insb. von Reifenbauteilen.

Bisher können mittels Laser lediglich Strukturen mit einer Tiefe von höchstens 2 mm in die Fahrzeugluftreifenoberfläche eingraviert werden. Sehr schmale und tiefere Strukturen wie zum Beispiel Lamellen oder Rillen können bisher nicht mittels Laser eingebracht werden, da ein höherer Materialabtrag durch Laserstrahlung in nachteiliger Weise mit einer Hitzeentwicklung im Material einhergeht. Durch diese Hitzeentwicklung wird die Gummimischung des Fahrzeugluftreifens beschädigt, insbesondere können Risse entstehen, und/oder kann dies zu einer schlechten Qualität der Strukturen führen.

Der Erfindung liegt die Aufgabe zugrunde, ein verbessertes Verfahren zum Einbringen von Strukturen in die Oberfläche eines Fahrzeugluftreifens bereitzustellen, welche(s) die problematische Hitzeentwicklung beim Materialabtrag vermeidet.

Die Erfindung löst diese Aufgabenstellung mit den kennzeichnenden Merkmalen des Patentanspruches 1.

Weitere Ausgestaltungen der Erfindung sind Gegenstand der sich jeweils anschließenden Unteransprüche.

Ein erfindungsgemäßes Verfahren zum Einbringen von Strukturen in die Oberfläche eines Fahrzeugluftreifens, insbesondere einer Kennzeichnung in eine Seitenwand des Fahrzeugluftreifens und/oder eines Profils in einen Laufstreifen des Fahrzeugluftreifens, mittels eines gepulst betriebenen Lasers, wird dahingehend verbessert, dass ein Festkörperlaser verwendet wird, welcher mit einer Pulsdauer von weniger als 2 µs betrieben wird.

Im Vergleich zu der aus dem Stand der Technik bekannten Verwendung eines CO₂-Lasers zum Einbringen von Strukturen haben Festkörperlaser den Vorteil, dass diese eine wesentlich höhere Strahlqualität sowie ein besseres Kosten / Nutzen- Verhältnis haben.

Für ein optimales Ergebnis beim Einbringen der Strukturen mit einer möglichst geringen Hitzeentwicklung im Material, das heißt möglichst geringen bis gar keinen Hitzeschäden im Material, hat sich der gepulste Betrieb eines Festkörperlasers mit den folgenden Parametern herausgestellt: erfindungsgemäß beträgt die verwendete Pulsdauer des Lasers weniger als 2 µs. Bevorzugt wird der Laser mit einer noch kürzeren Pulsdauer von weniger als 100 ns betrieben. Weiterhin ist die bevorzugte Pulsenergie des Lasers größer als 2 mJ, wobei die Pulsenergie das Verhältnis der mittleren Leistung des Lasers durch die Pulsfrequenz darstellt. Ein weiterer Parameter des Lasers ist die Beugungsmaßzahl M², welche bevorzugt kleiner als 1,5 ist. Die Beugungsmaßzahl M² ist der Kehrwert der Strahlqualität K des Lasers.

Durch eine Einhaltung dieser bevorzugten Parameter des Lasers, vor allem durch die sehr geringe Pulsdauer, können die vom Laserstrahl getroffenen und damit der Hitze ausgesetzten Stellen im Material stark reduziert werden. Dadurch entstehen vorteilhafterweise weniger Hitzeschäden im Material, wodurch wiederum ein größerer Materialabtrag mit hoher Präzision und sehr guter Schnittqualität gewährleistet ist.

Zur weiteren Vermeidung von Hitzeschäden im Material wird der Laserstrahl des Lasers sehr schnell über die Oberfläche des Fahrzeugluftreifens bewegt. Eine Relativgeschwindigkeit zwischen Laserstrahl und Oberfläche beträgt vorteilhaft mindestens 300 mm/s, bevorzugt mindestens 1 m/s. Um eine derart schnelle Bewegung des Laserstrahls über die Oberfläche des Fahrzeugluftreifens zu realisieren, wird vorteilhafterweise ein Galvanometer-Scanner verwendet. Dabei wird der Laserstrahl mit Hilfe von Spiegeln und/oder Fasern, insbesondere Glasfasern, umgelenkt und über die Oberfläche bewegt.

Zur Positionierung des Fahrzeugluftreifens wird vorteilhafterweise der Fahrzeugluftreifen relativ zum Laser bewegt oder umgekehrt. Eine Ausgestaltung mit einem fixierten Laser und bewegbarem, insbesondere rotierbarem, Fahrzeugluftreifen hat sich als besonders bevorzugt erwiesen. Die Bewegung des Fahrzeugluftreifens kann vorteilhafterweise in alle Rotations- sowie Translationsrichtungen erfolgen.

Vorteilhafterweise können mit dem erfindungsgemäßen Verfahren Strukturen mit einer maximalen Tiefe von bis zu 10 mm und einer minimalen Breite von bis zu 0,2 mm in die Oberfläche des Fahrzeugluftreifens eingebracht werden. Dabei ist es möglich, nicht nur senkrechte Profile oder Strukturen einzugravieren, sondern beispielsweise auch sich nach unten erweiternde Strukturen in die Oberfläche einzubringen. Dies kann durch eine Kippbewegung des Fahrzeugluftreifens beziehungsweise des Laserstrahls, relativ zur Oberfläche des Fahrzeugluftreifens ermöglicht werden.

Weiterhin wird eine Vorrichtung zum Einbringen von Strukturen in die Oberfläche eines Fahrzeugluftreifens, insbesondere einer Kennzeichnung in eine Seitenwand des Fahrzeugluftreifens und/oder eines Profils in einen Laufstreifen des Fahrzeugluftreifens, gemäß dem vorstehend beschriebenen, erfindungsgemäßen Verfahren, zumindest aufweisend eine Halteeinrichtung für den Fahrzeugluftreifen, einen Laserhaltearm mit einem Laser und eine Bewegungseinrichtung zum Bewegen eines Laserstrahls des Lasers über die Oberfläche des Fahrzeugluftreifens, dahingehend verbessert, dass der Laser ein gepulst betriebener Festkörperlaser mit einer Pulsdauer von weniger als 2 µs ist.
Bevorzugt eignet sich ein als Scheibenlaser ausgebildeter Festkörperlaser zum Strukturieren von Fahrzeugluftreifen. Beim Betrieb des Lasers werden bevorzugt die voranstehend genannten Parameter wie Pulsdauer, Pulsenergie etc. verwendet, um ein optimales Ergebnis mit minimaler Hitzeentwicklung im Reifenmaterial bei der Kennzeichnung beziehungsweise der Profilierung zu erhalten. Bevorzugt handelt es sich bei der zu strukturierenden Oberfläche des Fahrzeugluftreifens um die Seitenwände oder die Innenschicht des Fahrzeugluftreifens oder um den Laufstreifen des Fahrzeugluftreifens, in welchen ein Profil eingebracht wird.

Um den Fahrzeugluftreifen relativ zu dem Laser zu positionieren, sind die Halteeinrichtung mit dem Fahrzeugluftreifen und der Laserhaltearm mit dem Laser bevorzugt relativ zueinander bewegbar ausgeführt. Bevorzugt ist die Halteeinrichtung derart ausgestaltet, dass der Fahrzeugluftreifen zumindest rotiert werden kann. Weiterhin bevorzugt sind die Halteeinrichtung und der Laserhaltearm so ausgestaltet, dass der Fahrzeugluftreifen beziehungsweise der Laser in alle Richtungen bewegt werden kann. Beispielsweise kann der Laserhaltearm als herkömmlicher Roboterarm mit mehreren Gelenken ausgestaltet sein, welche eine Bewegung des Arms in allen Freiheitgraden ermöglichen. Gleiches gilt für die Halteeinrichtung des Fahrzeugluftreifens. Eine bevorzugte Ausgestaltung der Vorrichtung sieht jedoch vor, dass der Laserhaltearm fixiert ist und der Fahrzeugluftreifen relativ zu dem Laser bewegt und somit positioniert wird.

Der Laserstrahl des Lasers wird bevorzugt mittels einer als Galvanometer-Scanner ausgeführten Bewegungseinrichtung abgelenkt und über die Oberfläche des Fahrzeugluftreifens geführt. Dies geschieht vorteilhafterweise mit einer sehr hohen Geschwindigkeit von mindestens 300 mm/s. Dabei weist der Galvanometer-Scanner Spiegel und/oder Fasern, insbesondere Glasfasern, auf, welche sehr schnell angesteuert werden können und so eine schnelle Ablenkung des Laserstrahls bewirken.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine Prinzipdarstellung mehrerer unterschiedlicher, beispielhafter Strukturen in der Oberfläche eines Fahrzeugluftreifens,
- Figur 2:: eine stark vereinfachte Prinzipdarstellung einer Vorrichtung zur Veranschaulichung der Erfindung in einer ersten Ausgestaltung und
- Figur 3:: eine stark vereinfachte Prinzipdarstellung einer Vorrichtung zur Veranschaulichung der Erfindung in einer weiteren Ausgestaltung.

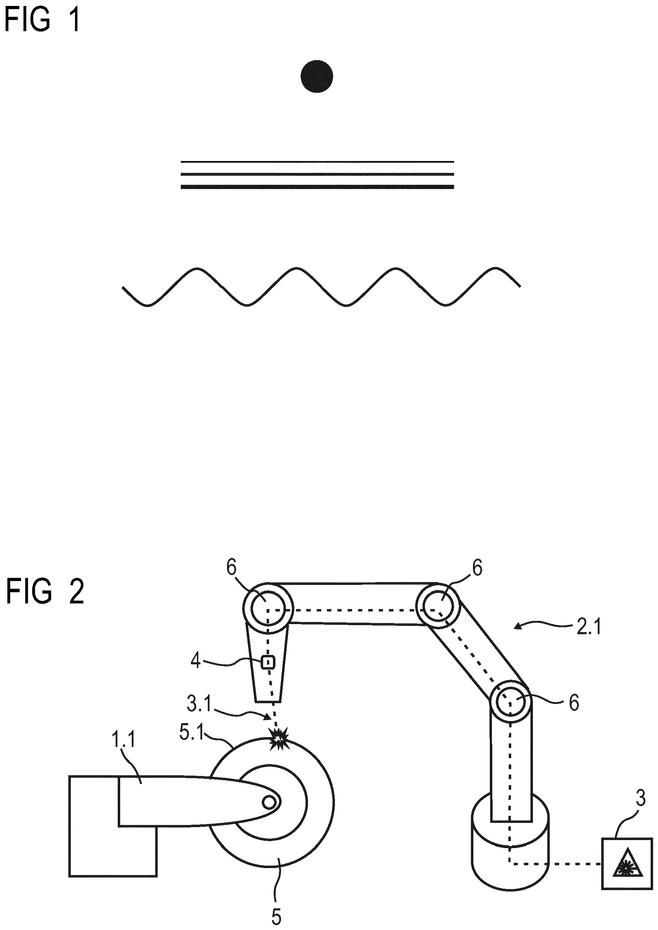

Die Figur 1 zeigt eine Prinzipdarstellung mehrerer unterschiedlicher, beispielhafter Strukturen in der Oberfläche eines Fahrzeugluftreifens. Von oben nach unten sind hier die folgenden Strukturen dargestellt, welche in die Oberfläche eines Fahrzeugluftreifens, also vor allem in die Seitenwände, eine Innenschicht oder in den Laufstreifen eingebracht werden können:
- ein kreisförmiges Sackloch mit einem Durchmesser von 2 mm und einer Tiefe von 8 mm,
- drei gerade Linien mit unterschiedlichen Breiten von 0,1 mm, 0,2 mm und 0,3 mm, und
- eine sinusartige Kurve mit einer Linienbreite von 0,25 mm und einer Tiefe von 7 mm.

Es wird darauf hingewiesen, dass die gezeigten Strukturen nicht maßstabsgetreu wiedergegeben sind. Selbstverständlich können mit dem erfindungsgemäßen Verfahren auch jegliche andere Strukturen wie Zahlen, Buchstaben, Codes, zum Beispiel Barcodes oder QR-Codes, Muster für Reifenprofile oder andere in die Oberfläche eines Fahrzeugluftreifens eingebracht werden. Durch das erfindungsgemäße Verfahren kann die Hitzeentwicklung im Material bei der Lasergravur weitestgehend vermieden werden, sodass jegliche Strukturen, vor allem auch solche mit einem großen Materialabtrag, äußerst präzise in die Oberfläche eingebracht werden.

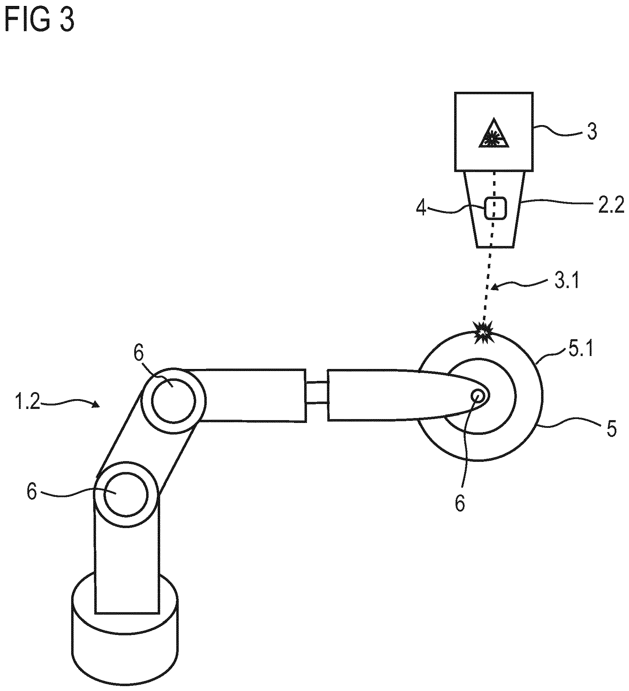

Die Figuren 2 und 3 zeigen jeweils eine stark vereinfachte Prinzipdarstellung einer Vorrichtung zum Einbringen von Strukturen in die Oberfläche eines Fahrzeugluftreifens in unterschiedlichen Ausgestaltungen. Diese Vorrichtung umfasst jeweils eine Halteeinrichtung 1.1 beziehungsweise 1.2 für einen Fahrzeugluftreifen 5, wobei der Fahrzeugluftreifen 5 zumindest rotierbar gelagert ist. Weiter umfasst die Vorrichtung jeweils einen Laserhaltearm 2.1 beziehungsweise 2.2 mit einem Laser 3. Der Laser 3 ist erfindungsgemäß als Festkörperlaser ausgebildet und wird mit sehr geringer Pulsdauer von weniger als 2 µs betrieben. Zum schnellen Bewegen eines Laserstrahls 3.1 des Lasers 3 über den Laufstreifen 5.1 des Fahrzeugluftreifens 5 weist die Vorrichtung jeweils einen Galvanometer-Scanner 4 auf. Der Galvanometer-Scanner 4 ist in den gezeigten Ausgestaltungen in den Laserhaltearm 2.1 beziehungsweise 2.2 integriert.

Zur Positionierung des Fahrzeugluftreifens 5 relativ zu dem Laser 3 können die Halteeinrichtung 1.1 beziehungsweise 1.2 mit dem Fahrzeugluftreifen 5 und der Laserhaltearm 2.1 beziehungsweise 2.2 mit dem Laser 3 relativ zueinander bewegt werden.

Gemäß der Ausgestaltung der Figur 2 ist der Fahrzeugluftreifen 5 in der Halteeinrichtung 1.1 rotierbar gelagert. Der Laserhaltearm 2.1 weist drei Gelenke 6 auf, mittels derer der Laserhaltearm 2.1 in allen Richtungen bewegbar ist, sodass das einzubringende Profil auf dem Laufstreifen 5.1 des Fahrzeugluftreifens 5 beliebig positioniert werden kann.

Hingegen ist gemäß der Figur 3 der Laser 3 beziehungsweise der Laserhaltearm 2.2 fixiert und der Fahrzeugluftreifen 5 ist an einer in allen Richtungen beweglichen Halteeinrichtung 1.2 rotierbar gelagert. Die Halteeinrichtung 1.2 weist hierzu ebenfalls drei Gelenke 6 auf.

### Bezugszeichenliste

- 1.1: Halteeinrichtung, erste Ausgestaltung
- 1.2: Halteeinrichtung, zweite Ausgestaltung
- 2.1: Laserhaltearm, erste Ausgestaltung
- 2.2: Laserhaltearm, zweite Ausgestaltung
- 3: Festkörperlaser
- 3.1: Laserstrahl
- 4: Galvanometer-Scanner
- 5: Fahrzeugluftreifen
- 5.1: Laufstreifen
- 6: Gelenke

## Patentansprüche

1. Verfahren zum Einbringen von Strukturen in die Oberfläche eines Fahrzeugluftreifens (5), insbesondere einer Kennzeichnung in eine Seitenwand des Fahrzeugluftreifens (5) und/oder eines Profils in einen Laufstreifen (5.1) des Fahrzeugluftreifens (5), mittels eines gepulst betriebenen Lasers (3),
**dadurch gekennzeichnet, dass**
ein Festkörperlaser (3) mit einer Beugungsmaßzahl (M2) von kleiner als 1,5 verwendet wird,
welcher mit einer Pulsdauer von weniger als 100 ns und mit einer Pulsenergie von größer als 2 mJ betrieben wird, und
der Laser (3) mit einer Relativgeschwindigkeit von mindestens 300 mm/s über die Oberfläche des Fahrzeugluftreifens (5) bewegt wird, sodass Strukturen mit einer Tiefe von bis zu 10 mm und einer minimalen Breite von bis zu 0,2 mm in die Oberfläche des Fahrzeugluftreifens (5) eingebracht werden.

2. Verfahren nach Anspruch 1,
**dadurch gekennzeichnet, dass**
der Laser (3) mit einer Relativgeschwindigkeit von mindestens 1 m/s über die Oberfläche des Fahrzeugluftreifens (5) bewegt wird.

3. Verfahren nach Anspruch 2, **dadurch gekennzeichnet, dass**
ein Galvanometer-Scanner (4) verwendet wird.

## Claims

1. Method for introducing structures into the surface of a pneumatic vehicle tyre (5), in particular an identification into a sidewall of the pneumatic vehicle tyre (5) and/or a profile into a tread (5.1) of the pneumatic vehicle tyre (5), by means of a laser (3) operated in a pulsed manner, **characterized in that**
a solid-state laser (3) with a diffraction measuring number (M2) of less than 1.5 is used, which is operated with a pulse duration of less than 100 ns and with a pulse energy of greater than 2 mJ, and
the laser (3) is moved over the surface of the pneumatic vehicle tyre (5) at a relative speed of at least 300 mm/s, so that
structures with a depth of up to 10 mm and a minimum width of up to 0.2 mm are introduced into the surface of the pneumatic vehicle tyre (5).

2. Method according to Claim 1,
**characterized in that**
the laser (3) is moved over the surface of the pneumatic vehicle tyre (5) at a relative speed of at least 1 m/s.

3. Method according to Claim 2,
**characterized in that**
a galvanometer scanner (4) is used.

## Revendications

1. Procédé pour incorporer des structures dans la surface d'un pneu de véhicule (5), notamment une identification dans une paroi latérale du pneu de véhicule (5) et/ou d'un profil dans une bande de roulement (5.1) du pneu de véhicule (5), au moyen d'un laser (3) fonctionnant par impulsions,
**caractérisé en ce**
**qu'**un laser à corps solide (3) ayant un indice de diffraction (M2) inférieur à 1,5 est utilisé,
lequel fonctionne avec une durée d'impulsion inférieure à 100 ns et avec une énergie d'impulsion supérieure à 2 mJ, et
le laser (3) est déplacé à une vitesse relative d'au moins 300 mm/s au-dessus de la surface du pneu de véhicule (5), de sorte que
des structures ayant une profondeur maximale de 10 mm et une largeur minimale pouvant atteindre 0,2 mm soient incorporées dans la surface du pneu de véhicule (5).

2. Procédé selon la revendication 1, **caractérisé en ce que** le laser (3) est déplacé à une vitesse relative d'au moins 1 m/s au-dessus de la surface du pneu de véhicule (5).

3. Procédé selon la revendication 2, **caractérisé en ce qu'**un système de balayage à galvanomètre (4) est utilisé.
